# EUROPEAN PATENT APPLICATION

(11) **EP 0 875 896 A1**
(43) Date of publication of application: **04.11.1998**
(21) Application number: 98107992.4
(22) Date of filing: 30.04.1998
(51) Int. Cl.: G11B 33/04

(54) **Compact disc storage case**

(30) Priority: 30.04.1997 JP 112688/97
(71) Applicant: Nepco S.A., 14130 Pont l'Evêque (FR)
(72) Inventor: Sato, Hiroyuki, Ashigarakami-gun, Kanagawa-ken (JP)
(74) Representative: Müller-Boré & Partner Patentanwälte

(57) **Abstract**

It is the issue to provide a compact disc storage case that resolves the problems with conventional technologies and which makes it possible to reduce forming costs and improve the efficiency of forming work. The compact disc storage case (30) that is this invention is a flat, parallelepipedic compact disc storage case having a lid (22) moveably hinged at one end of the lid's sides to one end of the sides of the disc storage compartment (2), and that said lid has holes (23) in its top panel (14) larger than the projected area of the label tabs (19) and opposing the label tabs (19), which project from the inner surfaces of said sides (15, 16), projections for the stationary-side die that form the top panel-side undercut of said label tabs (19) are located at the positions corresponding to said holes (23), and the formed lid (22), from which said label tabs (19) protrude, is easily discharged from the die cavity as the movable-side die is opened.

## Description

This invention concerns a flat, roughly parallelepipedic storage case capable of storing relatively small-diameter optical recording discs (hereinafter referred to simply as compact discs), and concerns in particular a compact disc storage case having an improved structure surrounding the label tabs of the aforementioned case's lid.

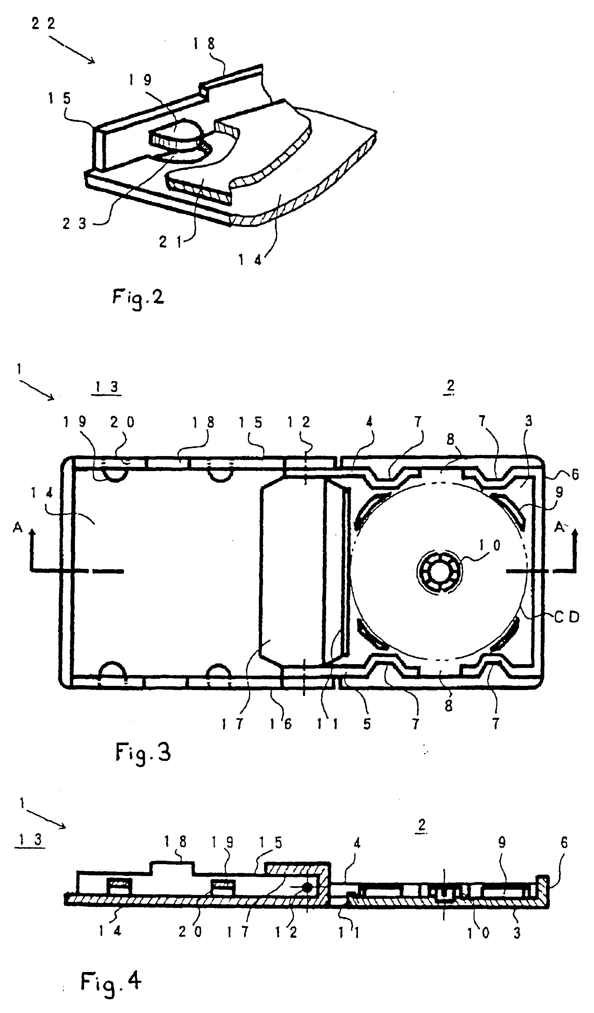

In recent years for example, many compact discs having a diameter of roughly 12 centimeters and a large storage capacity have been released commercially. Said compact discs are normally placed and stored in cases like those shown in Figs. 3 through 6.

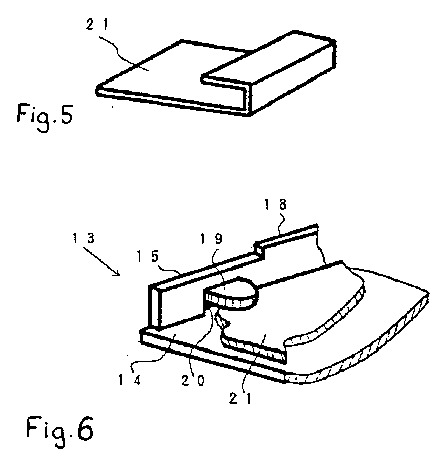

Fig. 3 is a top view of a conventional compact disc case (1) in its opened state; Fig. 4, a cross-section cut along line A-A in Fig. 3; Fig. 5, an oblique view of the label (21) folded into an L shape that is inserted into the pocket (17) in the lid (12) that comprises part of said compact disc storage case, and Fig. 6, an oblique view of the label tab (19), and its periphery, that projects from the inner surface of the sides (15, 16) of said lid (13).

The conventional compact disc case (1) would comprise a storage compartment (2) and a lid (13) together forming a flat parallelepiped. Said storage compartment (2), in addition to having, protruding from the middle of the inner surface of its bottom panel (3), a disc stopper (10) that fits into the compact disc's center hole and stops the compact disc from moving in the radial direction, would have multiple disc anchors (9) arranged around said compact disc's outer edge.

Furthermore, said storage compartment (2) would be enclosed by both sides (4, 5) and the front (6) along the inner periphery of three sides of said bottom panel (3). On the remaining side of said bottom panel (3) would be a notch (16) in such a manner that the pocket (17) of said lid (13), described below, aligns with the plane of said bottom panel (3) when said lid (13) rotates. On a section of said sides (4, 5) there would be multiple clasping depressions (7) that clasp the label tabs (19) of said lid (42), described below, and apertures (8) that facilitate the insertion and removal of said compact discs (CD). At the ends of said sides (4, 5) would be the bearing holes into which the axis (13) of said lid (13) insert.

On said lid (13), the sides (15, 16) would protrude, along the periphery of the inner surface of two sides of the top panel (14), slightly higher than said sides (4, 5) of said storage compartment, and have a rising (18) corresponding to the aforementioned aperture (8), while the inner surface of said sides (15, 16) would have multiple label tabs (19) corresponding to said clasping depressions (7) in said storage compartment (2).

Additionally, at the intersection between the top face of said label tabs (19) and the inner surface of said sides (4, 5) there would be a hole (20) formed by a slide core comprising a portion of the formed die. Also, said lid (13) would have a pocket (17) extending with an L-shaped profile from one edge of said top panel (14) along the side opposing the notch (11) in said bottom panel (3), and said top panel (14) between this pocket (17) and said sides (15, 16) would have a slot (not shown) permitting the insertion and rotation of one end each of said sides (4, 5).

A conventional compact disc storage case thus comprised would have an aforesaid lid (13) made of transparent plastic so that, at the very least, when a portion of the label (21) in Fig. 5 folded into a roughly L-shaped section was inserted between the inner surface of said top panel (14) and the top face of said label tabs (19) while fitting the L-shaped portion of aforesaid label (21) in the inner surface of said pocket (17), information about the contents stored on the compact disc (CD) that had been printed on the outer surface of the foldings of the label (21) would be visible from the outer faces of said lid (13).

However, with the conventional compact disc storage case (1) described above, an undercut would result from the overlapping in the same direction of said label tabs (19) of said lid and said top panel (14), necessitating that the slide core pass through the position corresponding to said hole (20), thereby precluding significant reductions in die fabrications costs, assembly costs and maintenance costs, and also making it difficult to improve forming tact.

The objective of this invention is to provide a compact disc storage case that resolves the problems with conventional techniques, lowers forming costs, and increasing the efficiency of forming work.

The objective of this invention is achieved by a flat, parallelepipedic compact disc storage case having a lid moveably hinged at one end of said lid's sides to one end of the sides of the disc storage compartment, and characterized by said lid's whose top panel faces label tabs projected from the inner surfaces of said sides and having holes in its top panel larger than the projected area of the label tabs.

Being that the compact disc storage case that is this invention is a flat, parallelepipedic compact disc storage case having a lid moveably hinged at one end of said lid's sides to one end of the sides of the disc storage compartment, and that said lid has holes in its top panel larger than the projected area of the label tabs and opposing the label tabs, which project from the inner surfaces of said sides, projections for the stationary-side die that form the top panel-side undercut of said label tabs are located at the positions corresponding to said holes, and the formed lid, from which said label tabs protrude, is easily discharged from the die cavity as the movable-side die is opened.

In a preferred embodiment the compact disc storage case is characterized in that said label tabs also function as the closure tabs for said lid.

Because said label tabs of the compact disc storage case that is this invention also function as the closure tabs for said lid, the need for additional protrusions with undercuts on the inner surface of said lid sides is eliminated.

Thus, the compact disc storage case that is this invention makes it possible to reduce forming costs and increase the efficiency of forming work.

The invention is described below by way of example with reference to attached drawings, in which
- Fig. 1: shows a top view of the compact disc storage case that is this invention in its opened state,
- Fig. 2: shows an oblique view of the label tab, and its periphery, that projects from the inner surfaces of the inner side of the lid that comprises a portion of the compact disc storage case that is this invention,
- Fig. 3: shows a top view of a conventional compact disc storage case in its opened state,
- Fig. 4: shows a cross-section cut along line A-A in Fig. 3,
- Fig. 5: shows an oblique view of a label folded into an L shape that is inserted into the pocket in the lid that comprises part of the compact disc storage case in Fig. 4 and
- Fig. 6: shows an oblique view of the label tab, and its periphery, that projects from the inner surface of the sides of said lid.

One embodiment of the compact disc storage case that is this invention is described below using the attached drawings. Also, as all members of the compact disc storage case that is this invention other than the lid (22) and in particular the holes (23) positioned at the undercuts of the label tabs (19), which are described later, are the same as those of the above-mentioned conventional compact disc storage case (1), the same reference numbers are used in the description.

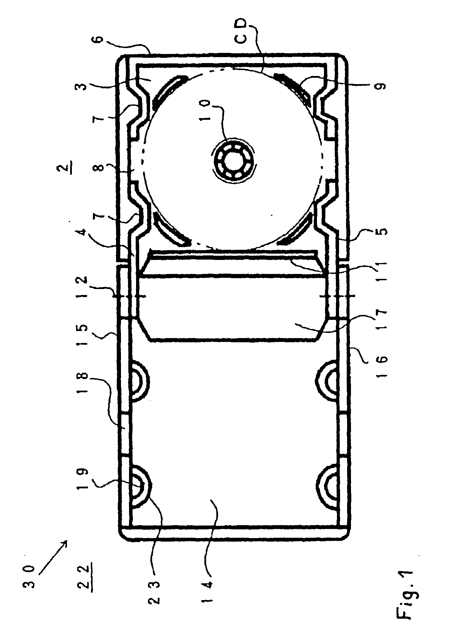

Fig. 1 is a top view of the compact disc storage case (30) that is this invention in its opened state; Fig. 2, an oblique view of the label tab (19), and its periphery, that projects from the inner surfaces of the inner side (15, 16) of the lid (22) that comprises a portion of compact disc storage case (30) that is this invention.

The compact disc storage case (30) that is this invention forms a flat parallelepiped comprising a storage compartment (2) and a lid (22). Said storage compartment (2), in addition to having, protruding from the middle of the inner surface of its bottom panel (3), a disc stopper (10) that fits into the compact disc's center hole and stops the compact disc from moving in the radial direction, has multiple disc anchors (9) arranged around said compact disc's outer edge.

Furthermore, said storage compartment (2) is enclosed by the sides (4, 5) and the front (6) along the inner periphery of three sides of said bottom panel (3). On the remaining side of said bottom panel (3) is a notch (11) in such a manner that the pocket (17) of said lid (12), described below, aligns in a coplanar manner with said bottom panel (3) when said lid (12) rotates. On a section of said sides (4, 5) are multiple clasping depressions (7) that clasp the label tabs (19) of said lid (22), described below, and apertures (8) that facilitate insertion and removal of said compact discs (CD). At one end of each of said sides (4, 5) is a bearing hole into which the axis (13) of said lid (22) inserts.

On said lid (22), the sides (15, 16) protrude, along the periphery of the inner surface of the sides of the top panel (14), slightly higher than said sides (4, 5) of said storage compartment, and have a rising (18) corresponding to the aforementioned apertures (8), while the inner surface of said sides (15, 16) has multiple label tabs (19) corresponding to said clasping depressions (7) in said storage compartment (2).

Formed in the inner surface of said top panel and opposing said label tabs (19) are holes (23) formed by protrusions (not shown) in the stationary-side die that comprises a portion of the forming die. By designing said holes (23) to have roughly the same projected profile as said label tabs (19) and to occupy an equal or greater surface area, label tabs (19) with good contours and parting lines can be obtained through cooperation with the movable-side die.

Also, said lid (22) has a pocket (17) extending with an L-shaped profile from one edge of said top panel (14) along the side opposing the notch (11) in said bottom panel (3), and said top panel (14) between this pocket (17) and said sides (15, 16) has a slot (not shown) permitting the insertion and rotation of one end each of said sides (4, 5).

Thus comprised, the compact disc storage case (30) that is this invention at the very least allows information about the contents stored on the compact disc (CD) that is printed on the outer surface of the foldings of the label (21) to be visible from the outer surfaces of said lid (22) by fabricating said lid (22) of transparent plastic and inserting a portion of the label (21) in Fig. 5 folded into a roughly L-shaped section between the inner surface of said top panel (14) and the top face of said label tabs (19) while fitting the L-shaped portion of aforesaid label (21) in the inner surface of said pocket (17).

The above-mentioned compact disc storage case (30) that is this invention will have new effects like the following: Namely, being that the compact disc storage case (30) that is this invention (30), which is a flat, parallelepipedic compact disc storage case (2) having a lid (22) moveably hinged at one end of the lid's sides to one end of the sides of the disc storage compartment, has a lid (22) having holes (23) in its top panel (14) larger than the projected area of the label tabs (19) and opposing the label tabs (19), which project from the inner surfaces of said sides (15, 16), projections for the stationary-side die that form the top panel-side undercut of said label tabs are located at the positions corresponding to said holes (23), and so the formed lid, from which said label tabs (19) protrude, is easily discharged from the die cavity as the movable-side die is opened.

Furthermore, because said label tabs (19) of the compact disc storage case (30) that is this invention also function as the closure tabs for said lid (22), the need for additional protrusions having undercuts on the inner surface of said lid (22) sides is eliminated.

### List of reference numerals

- 1: Conventional compact disc storage case
- 2: Storage compartment
- 3: Bottom panel
- 4: Side
- 5: Side
- 6: Front
- 7: Clasping depression
- 8: Aperture
- 9: Disc anchor
- 10: Disc stopper
- 11: Notch
- 12: Axis
- 13: Lid
- 14: Top panel
- 15: Side
- 16: Side
- 17: Pocket
- 18: Rising
- 19: Label tab
- 20: Hole
- 21: Label
- 22: Lid of this invention
- 23: Hole of this invention
- 30: Compact disc storage case of this invention
- CD: Compact disk

## Claims

1. A compact disc storage case forming a flat parallelepiped and having a lid movably hinged at one end of said lid's sides to one end of the sides of the disc storage compartment, characterized by
a lid (22) whose top panel (14), which faces label tabs (19) projected from the inner surfaces of both sides (15, 16), has openings (23) being larger in size than the projected area of the label tabs (19).

2. A compact disc storage case as described in claim 1, characterized by said label tabs (19) also functioning as closure tabs for the aforementioned lid (22).
